Europäisches Patentamt

European Patent Office

Office européen des brevets

(11) Publication number: **0 144 241**
**A1**

## (12) EUROPEAN PATENT APPLICATION

(21) Application number: **84308455.9**

(22) Date of filing: **05.12.84**

(51) Int. Cl.⁴: **F 16 D 25/063**
**F 16 D 25/14, B 21 J 9/18**

(30) Priority: **07.12.83 GB 8332625**

(43) Date of publication of application:
**12.06.85 Bulletin 85/24**

(84) Designated Contracting States:
**AT BE CH DE FR GB IT LI LU NL SE**

(71) Applicant: **DAVY McKEE (SHEFFIELD) LIMITED**
**Prince of Wales Road**
**Sheffield S9 4EX Yorkshire(GB)**

(72) Inventor: **Wilson, Geoffrey**
**509, Fulwood Road**
**Sheffield 10 Yorkshire(GB)**

(74) Representative: **Kirk, Geoffrey Thomas et al,**
**BATCHELLOR, KIRK & EYLES 2 Pear Tree Court**
**Farringdon Road**
**London EC1R 0DS(GB)**

(54) **Clutch Assembly.**

(57) A clutch assembly suitable for a mechanical forging pressing comprises a rotatable shaft (10) having an annular body (24) rotatably mounted on it. The body defines a cylinder (32) coaxial with the shaft. An annular friction disc (16) is located in the cylinder and is mounted for rotation with the shaft. The piston is urged against the disc to clamp it between the piston and the annular body to thereby couple the annular body and the shaft together. The clamping pressure applied by the piston is made adjustable so that the maximum torque applied by the shaft cannot exceed a predetermined value.

./...

FIG. I.

# CLUTCH ASSEMBLY

This invention relates to a clutch assembly which is adjustable whilst in operation and serves to control the torque which can be transmitted by the clutch before it begins to slip.

A particular, but not sole, application of this type of clutch is in a mechanical forging press. In this type of press, the clutch is incorporated in a flywheel or gearwheel determined by the size of the press.

When forging metal in a mechanical forging press, a hot workpiece is placed on a lower die fixed to the frame of the press while an upper die is connected to the lower end of a reciprocatable stem. The stem is moved by a pitman arrangement mounted on a crankshaft and rotation of the crankshaft is brought about by an electric motor driving the crankshaft through a flywheel and clutch assembly. The flywheel is driven continuously and the press operator trips the clutch mechanism to connect the flywheel to the crankshaft to initiate a power stroke in which the stem is moved down towards the fixed lower die to press the workpiece between the pair of closed dies.

It will be appreciated that, during the working stroke, various workpieces may have different characteristics and this can affect the amount of power required to bring about the forging stroke. For example, if the workpiece is below the required temperature, a greater effort will be required to make the forging. In circumstances such as this, the designed operating rating for the press may be exceeded and this can create an overload condition on certain parts of the press. The main bearings of the crankshaft and the big end bearing of the pitman may lose effective lubrication resulting in a shorter working life for these expensive components and lost production time whilst repairs are carried out.

It is also known for forging presses to stall when the loading becomes too high. This becomes most significant the nearer to the bottom of stroke that the stall occurs when two to three times the nominal rating of the press can be generated. This high level stalling of the press often necessitates the destruction of the toolset to relieve the press.

It is an object of the present invention to provide a clutch assembly having means by which the torque transmitted by the clutch assembly can be adjusted during the working stroke.

According to the present invention, a clutch assembly comprises a rotatable shaft; an annular body rotatably mounted on the shaft and defining a cylinder coaxial with the shaft; a piston displaceable in the cylinder; an annular disc located in the cylinder and mounted for rotation with the shaft; and fluid means by which the piston is urged in the direction towards the annular disc to clamp the disc between the piston and the annular body so as to couple the annular body and the shaft together, characterised in the provision of means for adjusting the clamping force applied by the piston.

By controlling the clamping force which is applied by the piston, the torque which can be transmitted by the clutch assembly is controlled. If the torque which the clutch assembly is attempting to transmit is increased excessively, then the coupling between the annular body and the shaft slips, thus preventing any increased torque from being transmitted by the clutch assembly.

In one embodiment of the invention, the means for controlling the clamping force comprises a plurality of plungers urged in the direction to displace the piston away from the annular disc and each plunger has a fluid operable piston/cylinder device associated with it whereby the force applied by the plungers to the piston is adjustable, thereby adjusting the clamping force which is applied by the piston.

In order that the invention may be more

readily understood, it will now be described, by way of example only, with reference to the accompanying drawings, in which:-

Figure 1 is a view, partly in section, of a clutch and flywheel assembly;

Figure 2 is a front view, with parts broken away, of a mechanical forging press having a clutch and flywheel assembly as shown in Figure 1;

Figure 3 is a schematic diagram of a forging press and hydraulic circuitry for operating the press; and

Figure 4 is part of a clutch and flywheel assembly showing an alternative embodiment of the invention.

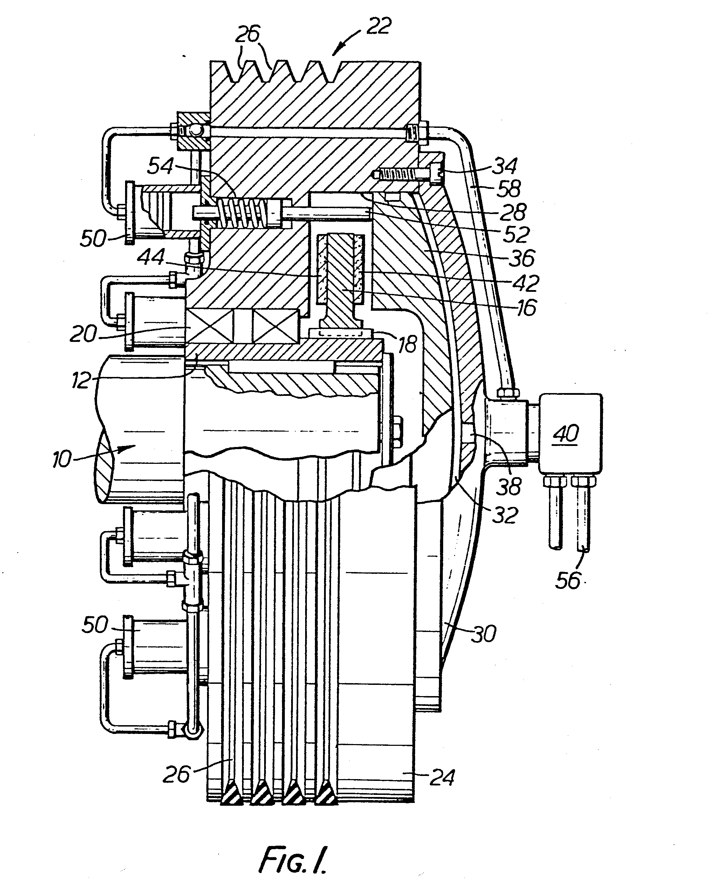

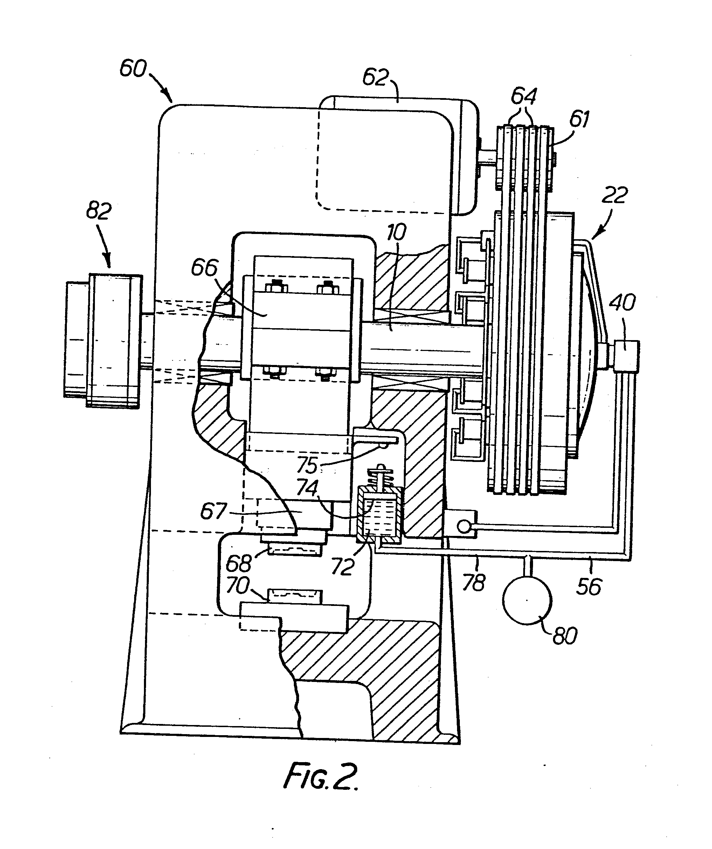

In Figure 1, a clutch and flywheel assembly is shown mounted on one end of a shaft 10 which may, for example, be the crankshaft of a mechanical forging press, such as is shown in Figure 2. A sleeve 12 is secured to one end of the shaft 10 and the sleeve carries an annular disc 16 arranged for sliding movement in the direction of length of the shaft 10 on splines 18. Bearings 20 mounted on the sleeve 12 allow a flywheel assembly 22 to be rotated with respect to the shaft 10. The flywheel assembly consists of a heavy annular body 24 mounted on the bearings 12 and having belt grooves 26 formed in its outer periphery.

The body has a cavity 28 formed in it and together with a cover plate 30 they define a cylinder 32. The cover plate 30 is removably secured to the body 24 by a plurality of bolts 34.

The cylinder is coaxial with the shaft 10 and there is a piston 36 which is displaceable in the cylinder. Fluid under pressure can be introduced into the cylinder between the piston and the cover plate 30 through an opening 38 connected to a rotary coupling 40. Pads of friction material 42, 44 are mounted on opposite sides of the disc 16. The friction pads are arranged such that, when the piston 36 is urged towards the disc 16 by the fluid introduced through the opening 38, the annular disc 16 and the friction pads are clamped between the body 24 and the piston 36 and couple the annular body to the shaft 10 so that the shaft rotates with the flywheel assembly.

On the side of the body 24 which is away from the cover 30 there are a number of piston/cylinder devices 50 mounted on the body. Each piston/cylinder device has a plunger 52 extending from the cylinder through the body 24 and bearing against the piston 36. A spring 54 surrounding the plunger serves to urge the plunger into engagement with the piston 36. When the piston 36 is caused to move towards the disc 16, it bears against the plungers 52 and displaces them against the action of the springs 54 but, by introducing fluid under pressure into the piston/cylinder devices 50, the force required by the piston to displace the plungers 52 is made adjustable and, hence, the clamping which is applied to the disc 16 by the piston 36 is controlled. The piston/cylinder devices 50 are connected together so that fluid is applied to all of the piston/cylinder devices and fluid is supplied through a pipe 56 which connects through the rotary coupling 40 with a further pipe 58 mounted on the flywheel assembly.

Referring now to Figure 2, the flywheel assembly 22 is shown mounted on a forging press 60 which includes an electric motor 62 having a pulley 61 driving the flywheel and clutch assembly by means of a plurality of belts 64 fitted in the belt grooves on the pulley and on the periphery of the body 24. A pitman 66 is mounted on the shaft 10 and, at the lower end of a stem 67 of the pitman, an upper die 68 is secured. This die, in association with a fixed die 70 mounted on the frame of the press, determines the shape of the workpiece after forging.. A cylinder 72 is connected to the main frame of the press and a piston 74 in the cylinder has a free upper end which projects from the cylinder and is contacted by a striker 75 mounted on the stem. The lower end of the cylinder 72 is connected through a pipe 78 to an accumulator 80 and to the pipe 56 which leads to the rotary coupling 40.

When power is to be transmitted from the revolving flyweel to the shaft 10, a valve (not shown) is actuated to cause fluid under pressure, usually air, to enter through the coupling 40 and the opening 38 into the cylinder and move the piston 36 to a position where it clamps the plate 16 between the body and the piston. Power is then transmitted from the flywheel through the clutch assembly to the shaft 10. The displacement of the piston 36 also acts against the plungers 52 thereby compressing the springs 54. Rotation of the shaft 10 causes the stem to move from the rest position at Top Dead Centre and, when the striker 75 contacts the piston 74, hydraulic fluid is forced out of the cylinder 72 by the piston.

The fluid flow to the accumulator 80 which is sized to accept the displaced fluid from cylinder 72, results in a controlled increase in pressure. The pressure increases therefore in the lines 56 and 58 to the piston/cylinder devices 50. Fluid pressure in these devices cause the plungers 52 to be further loaded in the direction toward the piston 36 and so reduces the net clamping force acting on the friction pads 42 and 44. This reduction in clamping force reduces the transmitted torque and hence the force that can be generated by the press stem which is displaced by the shaft. By careful selection of cylinder and accumulator size, a near constant force can be made available at the dies without the normal danger of significant overload.

It has been determined that nominal loading in a forging press using closed dies occurs at about 10° before Bottom Dead Centre. It is arranged that, at between 10° before Bottom Dead Centre and Bottom Dead Centre, the plungers are loaded such that the maximum permitted torque which can be transmitted by the clutch assembly cannot generate a press load significantly higher than the nominal rating.

As the stem returns to its rest position, a suitably placed valve is tripped to exhaust the cylinder 32, and the springs 54 on the plungers 52 cause the plungers to push the piston 36 back to its rest position and release the disc 16 from the flywheel. A brake mechanism 82 stops the stem at its rest position.

In the event of a stall condition occurring, the hydraulic pressure in the accumulator 80, and hence in the cylinders 50, is exhausted via a valve (not shown). The motor is then reversed, the brake released and the full torque of the clutch made available to reverse the stem which moves to separate the dies.

An alternative system to the stem actuated piston and cylinder would be to supply pressure from an independent source, such as a self-contained hydraulic power pack. Sensing means on the moving part of the press would signal a valve to direct hydraulic fluid through a variable pressure relief valve to the cylinders on the flywheel. The mechanisms in the flywheel and the way it operates on the clutch diaphragm would be as previously described.

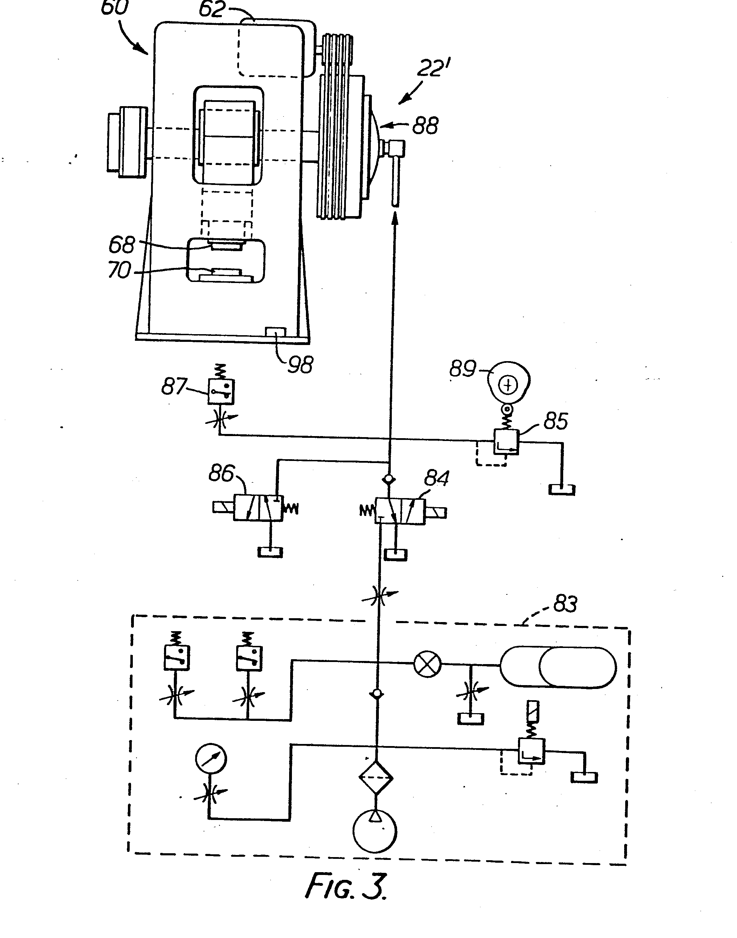

In a second embodiment of the invention, see Figure 3, a hydraulic power pack 83 operates the clutch assembly 22 through valve 84. The pressure in the cylinder 32 is varied during the down stroke by a cam operated relief valve 85 mounted upon the frame of the press. The cam 89 is mounted on and rotates with the eccentric shaft of the press.

When the press is to be operated, a trip switch 98 signals valve 84 to allow fluid at full system pressure to be directed to the clutch actuating cylinder 32. During the downstroke of the ram, the pressure in the cylinder 32 is monitored by the pressure switch 87 so as to switch off the valve 84 when the system pressure has been reached. The pressure in the cylinder 32 is further adjusted at the appropriate time by the operation of the plunger operated variable pressure relief valve 85 controlled by the cam 89.  This adjustment of pressure in the cylinder 32 controls the torque available from the clutch and hence limits the force that can be generated by the press to marginally above the nominal rating.

When the stem nears Top Dead Centre, valve 86 is operated to exhaust the fluid from the clutch cylinder 32 when the brake is energised to stop the stem at Top Dead Centre.  Valve 86 is then de-energised and the system reset ready for another stroke.

In the event of a stall condition occurring, the hydraulic relief valve 85 is isolated from the circuit by a valve (not shown).  The press motor is then reversed, the brake released, and the full torque of the clutch made available to reverse the stem which moves to separate the dies.

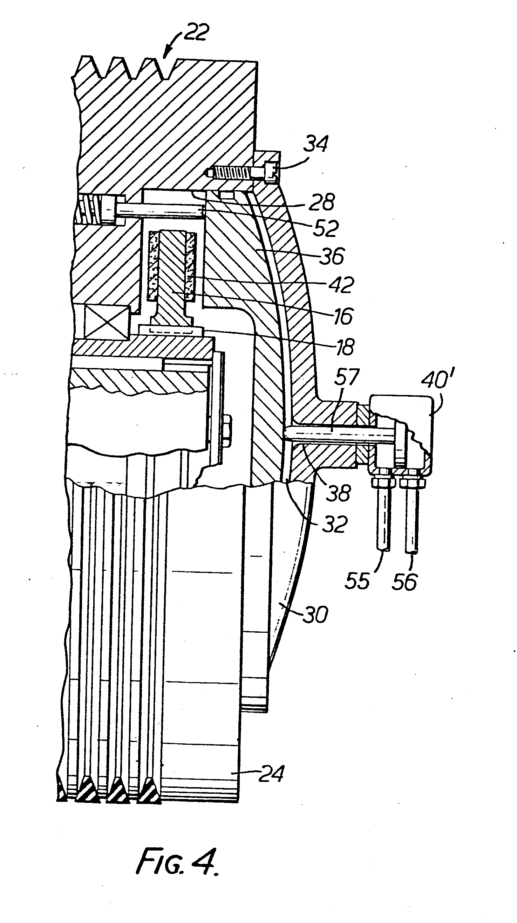

In the embodiment illustrated in Figure 4, a plurality of spring loaded plungers 52 act against the piston 36 but the plungers are not provided with piston/cylinder devices.  The rotary joint 40' additionally serves as a piston/cylinder device and the piston rod 57 extends from the piston of the piston/cylinder device, through the opening 38 and abuts against the adjacent face of the piston.

To displace the piston 36 to the left, the piston/cylinder device 40' is actuated to displace the rod 57 to the left and the rod bears against the piston 36 to displace it.  The force applied to the piston of the piston/cylinder device 40' is made up of the difference between the force due to the pressure of fluid supplied along pipe 56 to the full face of the piston and the force due to the pressure of fluid supplied along pipe 55 to the annular face of the piston.

A piston/cylinder device, similar to the device 72 shown in Figure 2, is employed and, as the stem 67 of the press moves down, it urges fluid along the pipe 55 and into the cylinder of device 40'.  The force on the piston is thus represented by the difference between the two fluid pressures acting on opposite sides of the piston and is adjustable.  The maximum force transmitted by the clutch assembly is, therefore, adjustable and can be arranged not to exceed a predetermined value.

In a still further embodiment, the fluid to displace the piston 36 towards the disc 16 is applied to the cylinder 32 to act against the face of the piston 36 which is away from the disc 16 and the fluid to oppose the movement of the piston 36 towards the disc is applied to the cylinder 32 to act on the face of the piston which is adjacent the disc.

Claims:

1.          A clutch assembly comprising a rotatable shaft (10); an annular body (24) rotatably mounted on the shaft and defining a cylinder (32) coaxial with the shaft; a piston (36) displaceable in the cylinder; an annular disc (16, 42, 44) located in the cylinder and mounted for rotation with the shaft; and fluid means (40, 40') by which the piston is urged in the direction towards the annular disc to clamp the disc between the piston and the annular body so as to couple the annular body and the shaft together, characterised in the provision of means (50, 85, 89, 57) for adjusting the clamping force applied by the piston.

2.          A clutch assembly as claimed in claim 1, including a plurality of plungers (52) urged in the direction to displace the piston away from the annular disc, characterised in that each plunger has a fluid operable piston/cylinder device (50) associated with it whereby the force applied by the plungers to the piston is adjustable thereby adjusting the clamping force which is applied by the piston.

3.        A clutch assembly as claimed in claim 2, characterised in that the cylinders of said devices (50) are connected together to a rotary pipe coupling (40) coaxial with said shaft (10).

4.        A clutch assembly as claimed in claim 2 or 3, characterised in the provision of means (72, 74) for adjusting the pressure of fluid applied to said pistoncylinder devices, said means being operable in response to rotation of said shaft or displacement of a body due to rotation of said shaft.

5.        A clutch assembly as claimed in claim 4, characterised in that said means (72, 74) is arranged such that the maximum torque transmitted by the shaft or the maximum load applied by the displaceable body does not exceed a predetermined level.

6.        A clutch assembly as claimed in claim 1, in which fluid under pressure is introduced into the cylinder (32) to urge the piston towards the disc and characterised in the provision of a pressure release valve (85) in the fluid supply line to the cylinder (32), said valve being operable in response to rotation of said shaft or displacement of a body due to rotation of said shaft.

7.      A clutch assembly as claimed in claim 6, characterised in that the release valve is operable by a cam rotatable with said shaft.

8.      A clutch assembly as claimed in claim 7, characterised in that the cam is arranged such that the maximum torque transmitted by the shaft or the maximum load applied by the displaceable body does not exceed a predetermined level.

9.      A clutch assembly as claimed in claim 1, characterised in that said means comprises a piston/cylinder device (72, 74) operable in response to rotation of the shaft or displacement of a body due to rotation of said shaft to introduce fluid under pressure into the cylinder (32) to urge the piston in the direction away from the annular disc.

10.      A clutch assembly as claimed in claim 9, characterised in that the piston/cylinder device is arranged such that the maximum torque transmitted by the shaft or the maximum load applied by the displaceable body does not exceed a predetermined level.

11.        A clutch assembly as claimed in claim 1, characterised in that the piston (36) is urged in the direction towards the annular disc (16) by a rod (57) displaced by a further fluid operable piston/cylinder device (40'), the force applied to the rod by the further piston/cylinder device being dependent upon the pressure of fluids applied to the opposite faces of the piston of the piston/cylinder device.

12.        A clutch assembly as claimed in claim 10, characterised in that the pressure of the fluid applied to the piston of the further piston/cylinder device (40') to urge the rod (57) in the direction to displace the piston (36) towards the annular disc (16) is substantially constant and the pressure of the fluid applied to the piston of the further piston/cylinder device (40') to urge the rod in the opposite direction is adjustable.

13.        A mechanical forging press including a rotatable shaft (10); a pitman (66) mounted on the shaft; an annular body (24) rotatably mounted on the shaft and defining a cylinder (32) coaxial with the shaft; drive means (61, 64) engaging the periphery of the annular body to rotate the body; a piston (36) displaceable in the cylinder; an annular disc (16, 42, 44) located in the cylinder and mounted for rotation with the shaft;  and fluid means (40, 40') by which the piston is urged in the direction towards the annular disc to clamp the disc between the piston and the annular body so as to couple the annular body and the shaft together, characterised in that means are provided to adjust the clamping force applied to the disc by the piston in response to the angular position of the shaft or the displacement of a stem displaced by the pitman so that the maximum load applied by the stem does not exceed a predetermined level.

FIG. I.

FIG.2.

FIG. 3.

FIG. 4.

**European Patent Office**

**EUROPEAN SEARCH REPORT**

**0144241**

. Application number

EP 84 30 8455

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 945 574 (W.F. PLUME)<br><br>* Whole document * | 1,4,5 | F 16 D 25/063<br>F 16 D 25/14<br>B 21 J 9/18 |
| Y | | 13 | |
| A | | 6 | |
| | --- | | |
| P,Y | DE-A-3 405 190 (H. SHIOKAWA)<br><br>* Whole document * | 13 | |
| A | | 7 | |
| | --- | | |
| X | US-A-2 876 743 (E.C. MAKI)<br><br>* Whole document * | 1,4,9 | |
| Y | | 2 | **TECHNICAL FIELDS SEARCHED (Int. Cl.4)** |
| | --- | | |
| Y | US-A-2 511 520 (G.W. WALTON)<br><br>* Columns 3,4; Figures 1,4 * | 2 | F 16 D 25/00<br>F 16 D 43/00<br>B 21 J |
| | --- | | |
| X | EP-A-0 098 054 (BORG-WARNER CORP.)<br><br>* Pages 9-14; figures 4,5,8,9 * | 1,4,9 | |
| | --- | | |
| A | US-A-3 848 622 (G.F. CUMMINGS)<br><br>* Whole document * | 1,4,5 | |
| | ----- | | |

The present search report has been drawn up for all claims

| Place of search | Date of completion of the search | Examiner |
|---|---|---|
| THE HAGUE | 11-03-1985 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82